# EUROPEAN PATENT APPLICATION

(11) **EP 1 508 643 A1**
(43) Date of publication of application: **23.02.2005**
(21) Application number: 04077340.0
(22) Date of filing: 19.08.2004
(51) Int. Cl.: E02B 3/10

(54) **Flood barrier**

(30) Priority: 22.08.2003 SE 0302278
(71) Applicant: Nero, Ingvar, 562 91 Mansarp (SE)
(72) Inventor: Nero, Ingvar, 562 91 Mansarp (SE)
(74) Representative: Arwidi, Bengt

(57) **Abstract**

The present invention relates to a protective embankment which is primarily intended for channelling water and preventing floods. In a protective embankment according to the invention water is used to prevent any unwanted influx of water. The protective embankment according to the invention is constructed using a number of plates (1,2), which form outer walls (1) and partition walls (2). The walls define spaces, a bag (10) or the like which is filled with water being placed in each space.

## Description

The present invention relates to a protective embankment. The protective embankment is primarily intended for channelling water and preventing floods.

Every year flooding causes serious damage and in the worst case also leads to loss of life. One way of preventing or reducing the scale of the damage is to build temporary protective embankments. For this purpose bags filled with sand are commonly used, which although providing stable embankments requires a lot of work and resources to erect, since the material is heavy and very often has to be transported by vehicle to the place where it is to be used and then laid in place by lifting, carrying and placing at the required location. There are therefore considerable difficulties in getting such embankments of sufficient size completed within the often short length of time available. Furthermore, when they are subsequently removed embankments of this type prove to have caused damage to the underlying surface on which they were placed.

It has also been proposed to build protective embankments from plastic or rubber modules which are coupled together by metal coupling elements. The modules are placed on an underlying surface in the form of plastic matting or the like and are filled with water so that the pressure from these makes the embankment watertight. US 6296420 B 1 describes a protective embankment which comprises liquid-filled cushions and a bag or carrier in which multiple cushions are placed in rows and which interacts with a supporting surface.

The present invention relates to an improved protective embankment which is easy to assemble and dismantle, so that the protective embankment can be rapidly set up and taken down. The embankment can be constructed by purely manual means, no machinery being required. The protective embankment according to the invention has a number of other advantages. One of these is that is that in transport and handling the parts of the dismantled embankment are lightweight and take up little space. A further advantage is that the embankment can be set up under difficult conditions, for example in a wind and in already flooded areas. Other advantages are that the protective embankment according to the invention is difficult to sabotage and that minor damage can easily be repaired. These and other advantages are also set forth in the following description.

In a protective embankment according to the invention water is used to prevent unwanted influx of water. The protective embankment has the characteristic features disclosed in claim 1, embodiments of the protective embankment having the characteristic features specified in the remaining claims.

The invention will be described in more detail below with reference to drawings attached, which show a protective embankment according to the invention and components for a preferred embodiment thereof.

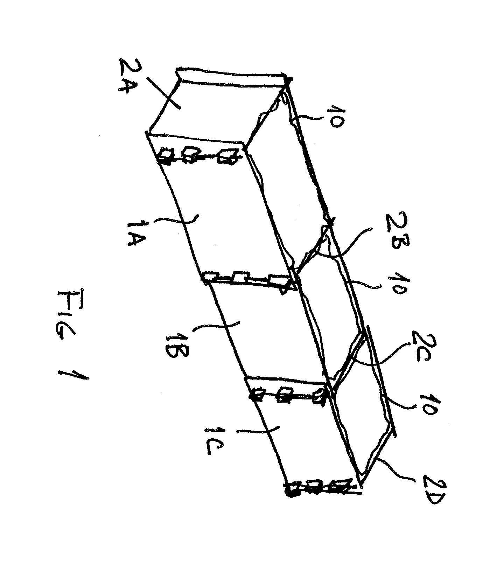

- Fig. 1: shows a short section of a protective embankment according to the invention.
- Fig. 2: shows a plate-shaped component forming part of the protective embankment.
- Fig. 3: shows another plate-shaped component forming part of the protective embankment.
- Figs. 4 and 5: show how the components are joined together.

The protective embankment according to the invention is constructed with a number of plates 1, 2, which form outer walls 1 and partition walls 2. The walls define spaces of a substantially parallelepiped shape. A bag 10 or the like which is filled with water is placed in each such space. In the preferred embodiment the bag 10 is a watertight plastic bag. The plates 1, 2 preferably comprise aluminium plates which combine light weight with good mechanical and physical characteristics. Two types of plates are preferably used for a protective embankment, one type being used for outer sides 1 and another type for partition walls 2.

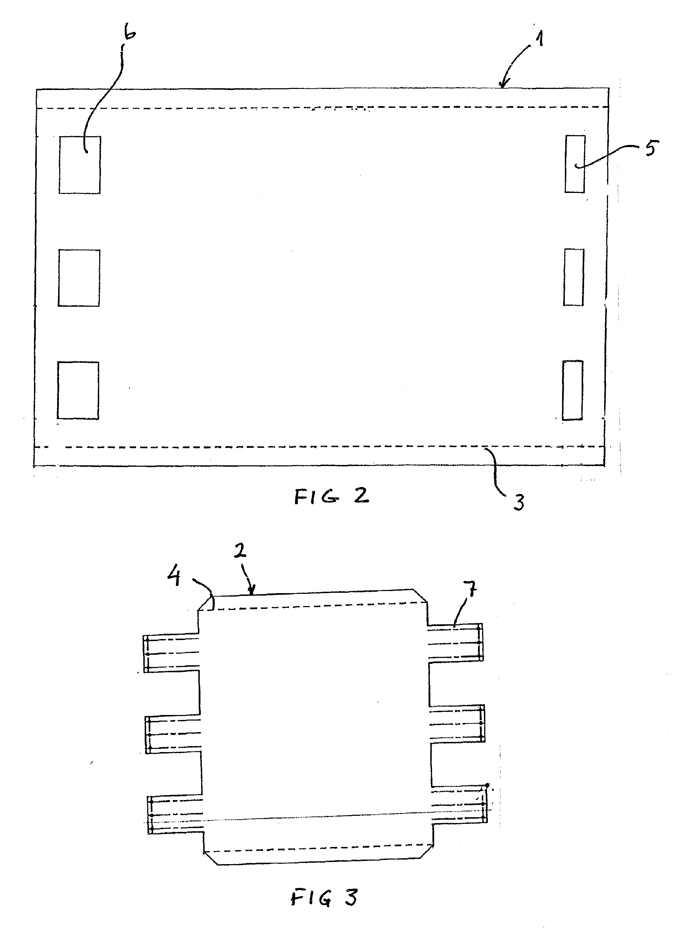

A preferred embodiment of the wall plates is shown in Figs. 2 and 3. In this embodiment the outer plates have rectangular holes 5, 6 adjoining their vertical side edges. These holes, which may be of different sizes, are intended for the insertion of fixing members 7 of the partition walls. In order to increase the rigidity of the plates, all plates may also have a bent upper and lower edge, the bend preferably being approximately 45 degrees in the case of the bending lines shown in the figures.

The fixing members 7 are preferably formed from flaps that project outwards from the partition wall plates as shown in Fig. 3. The flap is bent firstly 180 degrees with the desired diameter, and secondly with two smaller bends so that its outer end bears against the plate. The flap is fixed to the plate by means of rivets 9, for example, for which suitable holes are made in the plate and in the flap. In this way a channel situated outside the plate is formed for the pin that is used to assemble the protective embankment.

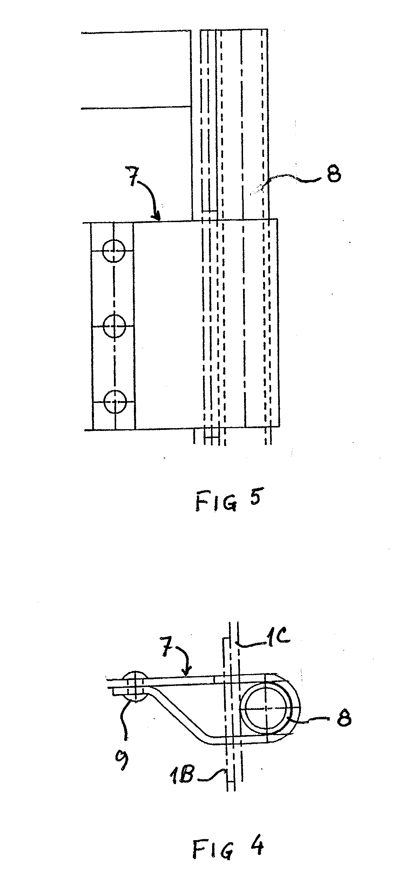

In joining the plates together to form a body for a protective embankment the flaps 7 are inserted through the holes 5, 6 in the outer plates. At the end walls the flaps are inserted through the holes in one plate, at the partition walls the flaps are inserted through the holes in two plates, as can be seen from Fig. 4 and 5. A locking pin 8, suitably in the form of a metal tube, is then inserted through the fixing members 7. The pin may be suitably bent at its upper end or formed in some other way so that it stays in the correct position regardless of the underlying ground surface for the protective embankment. The fixing members have a certain freedom of movement in the holes depending, among other things, on their size, and the protective embankment can therefore adjust to variations in the underlying surface. It is also possible to use the fixing members and perforations described above so as to adjust the alignment of the protective embankment. The fact that all joining parts are situated outside the space defined for the plastic bag 10 prevents the latter being damaged by sharp edges and the like.

A plastic bag filled with water is placed in each of the defined spaces formed by the outer and partition wall plates. The bent edges of the plates in this case also exercise a cohesive action on the structure. With suitably dimensioned plates a protective embankment is obtained which may weigh in the order of one tonne per linear metre, thereby making it very stable with a good capacity to withstand the pressure from the channelled water.

Numerous variations, such as the choice and dimensions of material, the precise design of the joining parts etc. are possible without departing from the idea of the invention.

## Claims

1. Protective embankment for channelling water, comprising a number of plates (1, 2) which form defining spaces with outer walls and partition walls and a bag (10) or the like which is placed in each such space and is filled with water, **characterised in that** rectangular holes (5, 6) are made in the outward facing outer plates (1) adjoining the vertical side edges thereof and that fixing members (7) in the form of outward-extending flaps which project out from the partition wall plate (2) are inserted through the holes, the holes being of a size such that the flaps (7) have a certain freedom of movement in the holes (5, 6).

2. Protective embankment according to Claim 1, **characterised in that** the partition wall plates (2) simultaneously constitute partition walls for two adjoining spaces.
